# EUROPEAN PATENT APPLICATION

(11) **EP 2 108 814 A2**
(43) Date of publication of application: **14.10.2009**
(21) Application number: 09154515.2
(22) Date of filing: 06.03.2009
(51) Int. Cl.: F03D 1/00, F03D 11/04

(54) **A wind turbine tower including an induction brazed joint and a method of fabricating the wind turbine tower**

(30) Priority: 10.03.2008 US 45489
(71) Applicant: General Electric Company, Schenectady, NY 12345 (US)
(72) Inventor: QUEK, Shu Ching, Clifton Park, NY 12065 (US); Zheng, Danian, Simpsonville, SC 29681 (US)
(74) Representative: Bedford, Grant Richard

(57) **Abstract**

A wind turbine tower (120) includes a first tower section (240), a second tower section (260), and an induction brazed joint (300) capable of coupling the first tower section and the second tower section.

## Description

The field of this disclosure relates generally to wind turbine towers, and more specifically to wind turbine towers assembled using induction brazing to form a joint between at least one of the wind turbine tower sections.

Wind turbines are increasingly used for the generation of electrical energy. At least some known wind turbines include a wind turbine tower, a nacelle located on the wind turbine tower and a rotor that is supported in the nacelle by means of a shaft. In modern wind turbines, the wind turbine tower includes three to six wind turbine tower sections: a top section, at least one mid section, and a bottom section. Each wind turbine tower section is fabricated from one to ten or more individual can segments that are typically rolled and welded together.

More specifically, the top section is the section farthest from the ground and the bottom section is the wind turbine tower section that is in contact with the ground. The mid tower section extends between the top and bottom sections. Each wind turbine tower section provides a robust structural load-path from the machine head into the foundation and ground. Moreover, the wind turbine tower sections provide support to any mechanical and/or electrical internals that may be required by the system. The wind turbine tower sections (e.g., top, mid, and bottom sections) are conventionally connected together to form the wind turbine tower via welding, a flange with bolts, and/or other known mechanical fasteners. Specifically, the can segments of each wind turbine tower section are welded together to form the wind turbine tower section and the tower sections are then bolted together at flange interfaces to form the wind turbine tower.

When assembling known wind turbines, the wind turbine tower is transported to the construction site using over-the-road trucks. Aside from the insufficient maneuverability of a vehicle transporting a wind turbine tower section having a length of from about 20 meters to about 50 meters, road transportation of tower sections of 20 to 50 meters in length maybe costly. Furthermore, specific routes for transport have to be followed since narrow curves maybe difficult to navigate. Also, loading and unloading of very long towers from the truck maybe difficult. As a result, sometimes tower sections must be transported by ship or helicopter, both of which increase the costs.

In one aspect, according to the present invention a wind turbine tower includes a first tower section, a second tower section, and an induction brazed joint capable of coupling the first tower section and second tower section.

In another aspect, a method of fabricating a wind turbine tower includes induction brazing a joint between a first tower section of the wind turbine tower and a second tower section of the wind turbine tower.

Various aspects and embodiments of the present invention will now be described in connection with the accompanying drawings, in which:
Figure 1 is a perspective view of an exemplary wind turbine;
Figure 2 is an enlarged perspective view of a portion of the wind turbine tower shown in Figure 1; and
Figure 3 is a perspective view of the first tower section and second tower section shown in Figure 2 being coupled together using an induction brazed joint.

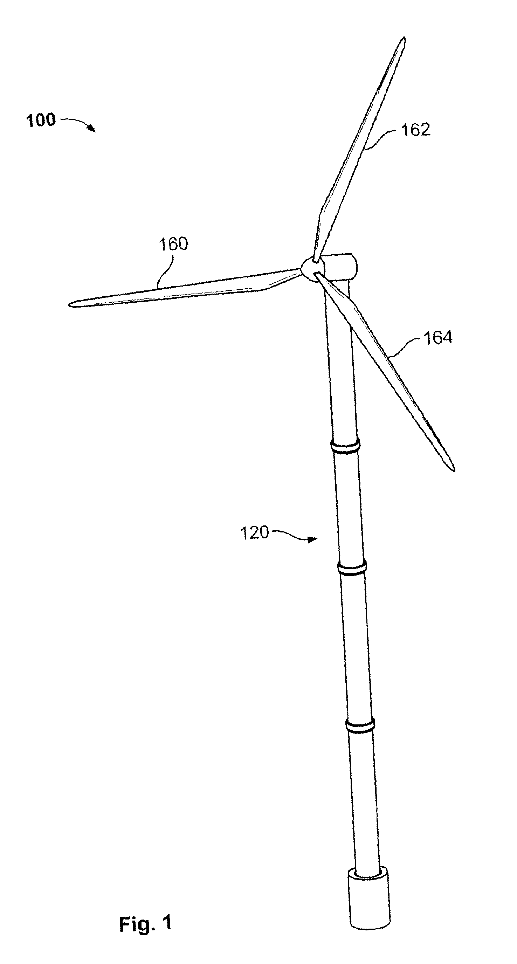

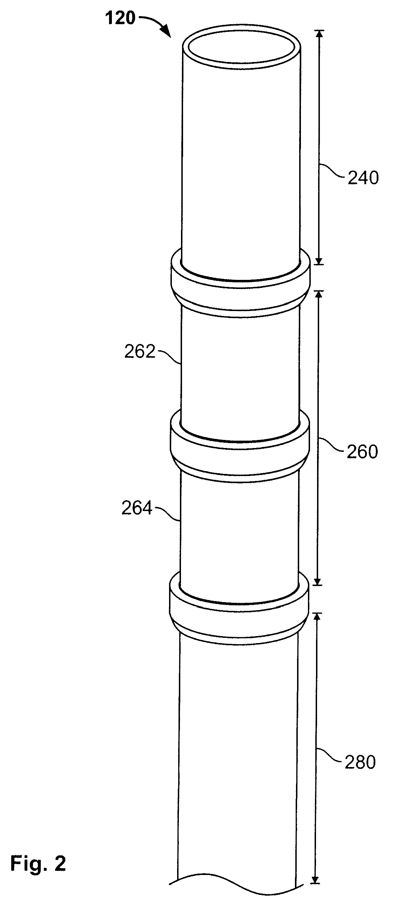

Figure 1 is a perspective view of an exemplary wind turbine 100 including a wind turbine tower 120 and three blades 160, 162, and 164. Wind turbine tower includes at least one wind turbine tower section. More specifically, in the exemplary embodiment as depicted in Figure 2, wind turbine tower 120 is assembled from three sections; specifically, top tower section 240, mid tower section 260, and base tower section 280. It should be understood by one skilled in the art that, while Figure 2 illustrates wind turbine tower 120 including only three individual sections 240, 260, and 280, a wind turbine tower 120 can be assembled with more or less than three sections without departing from the scope of the present disclosure.

As is known, each wind turbine tower section 240, 260, and 280 is fabricated from one or more can segments 262 and 264. For example, in one embodiment, wind turbine 100 includes between two and ten can segments. In the exemplary embodiment, each can segment 262 and 264 is between about 3 meters and about 15 meters in length and has a diameter of from at least about 1 meter, and more desirably, about 1 meter to about 6 meters. Furthermore, in the exemplary embodiment, can segments 262 and 264 (and corresponding tower section 260) are fabricated from a composite material. Particularly suitable composite materials for use in can segments (and thus, the tower sections) can include, for example, glass fibers, plastics (such as reinforced plastics and other plastics), carbon fibers, organic fibers, metal fibers, and the like, and combinations thereof. Other metallic and non-metallic materials, such as, but not limited to, metals such as stainless steel, aluminium, titanium, and the like, and alloys thereof, and concrete, may also be suitable for use in fabricating can segments and tower sections for the wind turbine tower of the present disclosure.

In the exemplary embodiment illustrated in Figure 2, mid tower section 260 is fabricated from two can segments 262 and 264. Alternatively, as should be understood by one skilled in the art, each tower segment 240, 260, and 280 may include any number of can segments that enables tower sections 240, 260, and 280 to function as described herein.

In the exemplary embodiment, can segments 262 and 264 are coupled together to form wind turbine tower section 260. As tower sections 240, 260, and 280 include at least one can segment 262 and 264, tower sections 240, 260, and 280 typically have a length of from about 6 meters to about 150 meters and diameter of from about 1 meter to about 6 meters. More preferably, each wind turbine tower section 240, 260, and 280 has a length of between about 10 meters and 100 meters and a diameter of from at least about 3 meters, more preferably from about 3 meters to about 10 meters. More preferably, wind turbine tower section 240, 260, and 280 has a length of between about 26 meters and about 40 meters (thereby, providing a wind turbine tower having a total height of from about 80 meters to about 160 meters), and a diameter of between about 3 meters and about 6 meters. As noted above, each can segment 262 and 264 is generally only limited in length by its transportability. The tower sections 240, 260, and 280 are then coupled together to form wind turbine tower 120.

In an alternative embodiment, the wind turbine tower is a lattice wind turbine tower. Lattice wind turbine tower are typically manufactured from truss-connected box segments that may be individually pre-manufactured and then coupled together to form the tower. Typically, the lattice wind turbine tower includes from about 5 to about 300 truss-connected box segments and, more preferably, from about 10 to about 40 truss-connected box segments. In an alternative embodiment, the wind turbine tower uses larger members that are thicker than the lattice truss-connected box segments, but smaller than the tubular tower sections to replace the truss-connected box sections of the lattice wind turbine tower.

Specifically, to fabricate a wind turbine tower 120 of the present disclosure, a wind turbine tower section 260, as described above, is provided. As noted above, the tower section 260 can be made up of one or more can segments 262, 264 and/or truss-like box segments. In one embodiment, as shown in Figure 2, tower section 260 can be made from two can segments 262, 264. Although described herein with respect to producing tower section 260 for wind turbine tower 120 by coupling can segments 262, 264, it should be understood that the tower section 260 could be made by coupling truss-like box segments (not shown), and the wind turbine tower 120 could be a lattice wind turbine tower 120, without departing form the scope of the present disclosure. Specifically, the truss-like box segments of one embodiment could be pre-manufactured (such as via welding or flange bolts) and then coupled using induction brazing as described below for can segments 262, 264. In an alternative embodiment, the truss-like box segments could be made using induction brazing and then coupled using induction brazing as described below for the can segments.

In the embodiment shown in Figure 2, can segments 262, 264 are connected at a joint (not shown) via induction brazing to form tower section 260. Typically, the length of the induction brazed joint will suitably depend on both the type of material the can segments (and resulting tower section) are made from and the area needed to control shear and tensile stresses placed on the can segments from surrounding environmental conditions (e.g., wind, heat, etc.). Typically, the joint length will be controlled by the thermal conduction length. More specifically, it is desirable to have a joint length that is long enough that the heat conducted during brazing will not be sufficient to melt or cause failure of the material typically used in forming the can segments, such as the composite glass reinforced plastics material.

To form the induction brazed joint between the first and second can segments described above, typically a non-ferrous filler metal or alloy is heated to its melting temperature using an induction coil assembly and is distributed between the first and second can segments to be coupled. In one embodiment, the induction coil assembly typically includes an AC power supply and an induction coil. Generally, the power supply sends alternating current through the induction coil, generating a magnetic field, which induces eddy currents for generating localized heat without any physical contact between the coil and the material to be coupled (e.g., first and second can segments and/or the first and second tower sections described more fully below).

Typically, the induction coil assembly heats the materials to be coupled to a temperature of at least about 800°C. More suitably, the induction coil assembly heats the materials to a temperature of from about 900°C to about 1300°C, and even more suitably, to a temperature of approximately 1000°C.

At its liquid temperature, the molten filler metal interacts with the base materials of the first and second can segments. Once the filler metal is allowed to cool, an exceptionally strong, sealed joint is formed between the first and second can segments. Specifically, the induction brazed joint becomes a sandwich of different layers, each metallurgically linked to the adjacent layers.

The induction coil can be any coil known in the art of induction brazing. For example, in one particularly preferred embodiment, the induction coil may be formed from copper tubing with a 1/8" to 3/16" diameter. The size and shape of the coil assembly (i.e., single or multiple turn; helical; round or square; internal or external) will depend upon the size and shape of the can segments (and/or tower sections, as described more fully below) to be coupled with an induction brazed joint. Other suitable induction coils are known in the art and, for example, are described in U.S. 6,559,428, issued to Panczner on May 6, 2003, which is hereby incorporated by reference to the extent it is consistent herewith.

Typical brazing filler metals or brazing agents are relatively reactive materials so that there is insufficient time for oxidation to occur which can weaken the brazed joint. Suitable brazing filler metals or brazing agents can include, for example, aluminum, aluminum alloys, stainless steel, galvanized steel, and the like, and combinations thereof. One particularly preferred brazing filler metal is galvanized steel as this metal has an extremely high strength. Exemplary brazing compositions used in the methods of the present disclosure include the aluminum-containing composition: 50-56% (by weight) aluminum; 20-22% (by weight) copper; 17-28% (by weight) zinc; and 2-5% (by weight) tin. Commercially available galvanized steel useful as a brazing filler metal is commercially available under the tradenames 4130 alloy steel and 4340 alloy steel.

As noted above, during the induction brazing method, the temperature of the induction coil assembly and the materials to be brazed can increase up to and above the melting temperature of the brazing filler metal. In some embodiments, the materials to be coupled with an induction brazed joint have melting temperatures at or below the temperature of brazing. As such, one aspect of the present disclosure further provides protecting the cylindrical can segments (and resulting tower sections) from the increased temperatures that result from induction brazing by wrapping at least one of the first cylindrical can segment and the second cylindrical can segment (and/or the first and second tower sections, as described below) with a cooling coil assembly.

Any cooling coil assembly known in the art of induction brazing can be utilized to wrap the first and/or second can segments. In one embodiment, the cooling coil assembly is the same as the induction coil assembly with the exception that cool water or cool air are pumped through the coils. As used herein, the terms "cool water" and "cool air" refer to water and air having a temperature of approximately room temperature or cooler. More suitably, the cool water and cool air that are pumped into the cooling coil assembly have a temperature of from about -10°C to about 40°C.

In one embodiment, a third can segment (not shown) is additionally coupled to second can segment 264. Specifically, while it is preferred that the third can segment is coupled to second can segment 264 via induction brazing a joint, as described above, between the third can segment and second can segment 264, it should be understood that the third can segment can be coupled to the second can segment without departing for the scope of the present disclosure. Specifically, as an alternative to induction brazing, the third can segment can be coupled to the second can segment using a method selected from the group consisting of adhesion, welding, mechanical coupling, such as via a flange bolt or bulkhead or other mechanical comply, and combinations thereof. For example, the second and third can segments could be welded together and then brazed to the first can section at the construction site of the wind turbine tower via induction brazing as described herein.

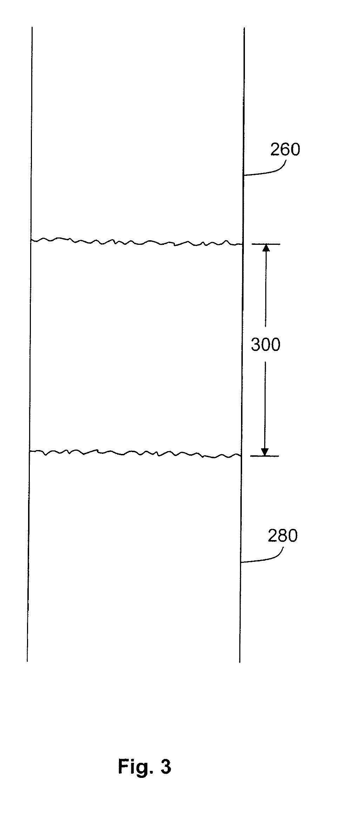

Once the wind turbine tower sections are fabricated, at least a first and second tower sections are coupled together using induction brazing as described above for coupling the individual can segments. Specifically, now referring to Figures 2 and 3, as with the can segments above, induction brazed joint 300 is formed between first tower section 280 and second tower section 260 to form wind turbine tower 120.

Furthermore, as with the can segments above, suitable brazing filler metals for use in the induction brazing of joint 300 between first tower section 280 and second tower section 260 can include, for example, aluminum, aluminum alloys, stainless steel, galvanized steel, titanium alloys, and the like, and combinations thereof. One particularly preferred brazing filler metal is galvanized steel as this metal has an extremely high strength.

Additionally, as with the can segments above, the wind turbine tower can have more than two wind turbine tower sections. For example, in the embodiment of Figure 2, third tower section 240 is additionally coupled to second tower section 260 to form three-section tower 120. As with the can segments, while it is preferred that third tower section 240 is coupled to second tower section 260 via induction brazing a joint (not shown), as described above, between third tower section 240 and second tower section 260, it should be understood that third tower section 240 can be coupled to second tower section 260 without departing for the scope of the present disclosure. Specifically, as an alternative to induction brazing, third tower section 240 can be coupled to second tower section 260 using a method selected from the group consisting of adhesion, welding, mechanical coupling, such as via a flange bolt or bulkhead or other mechanical comply, and combinations thereof.

While described herein as coupling two or three tower sections to produce the wind turbine tower, it should be recognized by one skilled in the art that more than three tower sections can be coupled via at least one joint formed from induction brazing without departing from the scope of the present disclosure. For example, the wind turbine tower can be made of four tower sections coupled together, five tower sections coupled together, or even six or more tower sections coupled together. Furthermore, as noted above, the entire wind turbine tower (all can segments and/or tower sections) do not need to be coupled via induction brazing a joint to be within the scope of the present disclosure. Specifically, as noted above, another method such as adhesion, welding, and mechanical coupling can be used to form the wind turbine tower of the present disclosure.

Suitably, in one embodiment, the wind turbine tower can be wrapped with a skin structure to protect the tower from the surrounding environmental conditions such as wind, heat, and the like. Typically, the skin structure is made from a composite material such as a combination of glass and epoxy, fabrics, or plastic panels. For example, lattice wind turbine towers are suitable completely wrapped in a skin structure to shield the tower from environmental conditions and further to improve the aerodynamics of the tower.

By using the wind turbine tower and the method of producing the wind turbine tower as described herein, a wind turbine tower that can be easily assembled at the construction site can be produced. Furthermore, as noted above, by producing a wind turbine tower in this manner, towers can be produced more efficiently and at a lower cost than conventional wind turbine towers. Additionally, transporting the tower sections will become easier and more cost effective.

When introducing elements of the present disclosure or preferred embodiments thereof, the articles "a", "an", "the", and "said" are intended to mean that there are one or more of the elements. The terms "comprising", "including", and "having" are intended to be inclusive and mean that there may be additional elements other than the listed elements.

As various changes could be made in the above constructions and methods without departing from the scope of the disclosure, it is intended that all matter contained in the above description and shown in the accompanying drawings shall be interpreted as illustrative and not in a limiting sense.

Various aspects and embodiments of the present invention are now defined by the following numbered clauses:
1. A wind turbine tower comprising:
   a first tower section,
   a second tower section, and
   an induction brazed joint capable of coupling the first tower section and the second tower section.
2. The wind turbine tower as set forth in clause 1, wherein the tower has a height of from about 80 meters to about 160 meters and a diameter of at least about 3 meters.
3. The wind turbine tower as set forth in any preceding clause, wherein the induction brazed joint comprises a brazing filler metal selected from the group consisting of aluminium, aluminium alloys, stainless steel, galvanized steel, and combinations thereof.
4. The wind turbine tower as set forth in any preceding clause, wherein at least one of the first tower section and the second tower section comprise from 2 to 10 can segments, and wherein adjacent can segments are coupled together with at least one induction brazed joint.
5. The wind turbine tower as set forth in any preceding clause, wherein the induction brazed joint is a first induction brazed joint, and wherein the wind turbine tower further comprises a third tower section and a second induction brazed joint coupling the third tower section to one of the first tower section and the second tower section.
6. The wind turbine tower as set forth in any preceding clause, wherein at least one of the first tower section, the second tower section, and the third tower section are comprised of a composite material.
7. The wind turbine tower as set forth in any preceding clause, wherein the composite material is selected from the group consisting of glass fibers, plastics, carbon fibers, organic fibers, metal fibers, and combinations thereof.
8. The wind turbine tower as set forth in any preceding clause, wherein the wind turbine tower is a lattice tower.
9. The wind turbine tower as set forth in any preceding clause, wherein at least one of the first tower section, the second tower section, and third tower section are independently comprised of a material selected from the group consisting of a metallic material, concrete, and combinations thereof.
10. A method of fabricating a wind turbine tower, the method comprising induction brazing a joint between a first tower section of the wind turbine tower and a second tower section of the wind turbine tower.
11. The method as set forth in clause 10, wherein the induction brazed joint comprises a brazing filler metal selected from the group consisting of aluminium, aluminium alloys, stainless steel, galvanized steel, and combinations thereof.
12. The method as set forth in clause 10 or 11, wherein the induction brazed joint comprises galvanized steel.
13. The method as set forth in any of clauses 10 to 12, wherein the induction brazing occurs at a temperature of from about 900°C to about 1300°C.
14. The method as set forth in any of clauses 10 to 13, wherein the induction brazing joint is a first induction brazing joint and the method further comprises induction brazing a second joint between a third tower section and one of the first tower section and the second tower section.
15. The method as set forth in any of clauses 10 to 14, further comprising coupling a third tower section to one of the first tower section and the second tower section using a method selected from the group consisting of adhesion, welding, mechanical coupling, and a combination thereof.
16. The method as set forth in any of clauses 10 to 15, further comprising coupling at least a first can segment and at least a second can segment to form the first tower section prior to induction brazing the first tower section and the second tower section.
17. The method as set forth in any of clauses 10 to 16, wherein the coupling comprises induction brazing a joint between the first can segment and the second can segment.
18. The method as set forth in any of clauses 10 to 17, wherein the coupling is conducted by a method selected from the group consisting of adhesion, welding, mechanical coupling, and a combination thereof.
19. The method as set forth in any of clauses 10 to 18, further comprising wrapping at least one of the first tower section and the second tower section with a cooling coil assembly prior to induction brazing the joint.
20. The method as set forth in any of clauses 10 to 19, further comprising wrapping the wind tower turbine with a skin structure.

## Claims

1. A wind turbine tower (120) comprising:
a first tower section (240),
a second tower section (260), and
an induction brazed joint (300) capable of coupling the first tower section and the second tower section.

2. The wind turbine tower (120) as set forth in claim 1, wherein the tower has a height of from about 80 meters to about 160 meters and a diameter of at least about 3 meters.

3. The wind turbine tower (120) as set forth in any preceding claim, wherein the induction brazed joint (300) comprises a brazing filler metal selected from the group consisting of aluminium, aluminium alloys, stainless steel, galvanized steel, and combinations thereof.

4. The wind turbine tower (120) as set forth in any preceding claim, wherein at least one of the first tower section (240) and the second tower section (260) comprise from 2 to 10 can segments (2262, 264), and wherein adjacent can segments are coupled together with at least one induction brazed joint (300).

5. The wind turbine tower (120) as set forth in any preceding claim, wherein the induction brazed joint (300) is a first induction brazed joint, and wherein the wind turbine tower further comprises a third tower section (280) and a second induction brazed joint coupling the third tower section to one of the first tower section (240) and the second tower section (260).

6. The wind turbine tower (120) as set forth in claim 5, wherein at least one of the first tower section (240), the second tower section (260), and the third tower section (280) are comprised of a composite material.

7. The wind turbine tower (120) as set forth in claim 6, wherein the composite material is selected from the group consisting of glass fibers, plastics, carbon fibers, organic fibers, metal fibers, and combinations thereof.

8. The wind turbine tower (120) as set forth in any preceding claim, wherein the wind turbine tower is a lattice tower.

9. The wind turbine tower (120) as set forth in claim 5 or any claim dependent thereon, wherein at least one of the first tower section (240), the second tower section (260), and third tower section (280) are independently comprised of a material selected from the group consisting of a metallic material, concrete, and combinations thereof.
